# EUROPÄISCHE PATENTSCHRIFT

(11) **EP 3 839 273 B1**
(45) Veröffentlichungstag und Bekanntmachung des Hinweises auf die Patenterteilung: **18.09.2024**
(21) Anmeldenummer: 19216707.0
(22) Anmeldetag: 16.12.2019
(51) Int. Cl.: F16B 5/06, F16B 21/07

(54) **BEFESTIGUNGSCLIP, BEFESTIGUNGSSYSTEM UND BAUTEILMONTAGEVERFAHREN**
FASTENING CLIP, FASTENING SYSTEM AND COMPONENT MOUNTING METHOD
CLIP DE FIXATION, SYSTÈME DE FIXATION ET PROCÉDÉ DE MONTAGE DE COMPOSANT

(43) Veröffentlichungstag der Anmeldung: 23.06.2021
(73) Patentinhaber: Newfrey LLC, New Britain, CT 06053 (US); Audi AG, 85045 Ingolstadt (DE)
(72) Erfinder: Warmuth, Manfred, 84089 Aiglsbach (DE); Eisendraut, Thomas, 85049 Ingolstadt (DE); Strigl, Raimund, 85084 Reichertshofen (DE); Rosemann, Frank, 35394 Giessen (DE); Kempf, Christian, 35394 Giessen (DE)
(74) Vertreter: Witte, Weller & Partner Patentanwälte mbB

(56) Entgegenhaltungen:
- DE-A1- 102009 014 133
- DE-B4- 112008 004 188
- DE-U1- 202009 015 837
- FR-A1- 2 980 444

## Beschreibung

Die vorliegende Erfindung betrifft einen Befestigungsclip für ein Befestigungssystem zum Befestigen eines Bauteils an einen Bauteilträger, wobei von einer Oberfläche des Bauteilträgers ein Bolzen vorsteht, mit einem Grundkörper, der eine Bolzenaufnahme bildet, die eine Längsachse definiert und die so ausgebildet ist, dass der Befestigungsclip auf den Bolzen aufgeschoben werden kann, mit wenigstens einem radial elastischen Rastfinger, der mit dem Grundkörper verbunden ist und der in die Bolzenaufnahme ragt, wobei der Rastfinger ein Rastmerkmal aufweist, das dazu ausgebildet ist, an einer Rastkontur des Bolzens anzugreifen, um den Befestigungsclip an dem Bauteilträger festzulegen, und mit wenigstens einer Bauteilaufnahme, in der zumindest ein Bauteilabschnitt eines zu befestigenden Bauteils aufnehmbar ist, wobei die Bauteilaufnahme eine Radialnut aufweist, die eine axiale Nutbreite definiert.

Ferner betrifft die vorliegende Erfindung ein Befestigungssystem mit einem Bolzen, der auf eine Oberfläche eines Bauteilträgers fügbar ist, und mit einem Befestigungsclip der oben beschriebenen Art.

Schließlich betrifft die vorliegende Erfindung ein Verfahren zum Montieren eines Bauteils an einem Bauteilträger, insbesondere unter Verwendung eines Befestigungssystems der oben beschriebenen Art.

Befestigungssysteme der oben beschriebenen Art werden beispielsweise im Karosseriebau verwendet. Das Befestigungssystem dient hierbei zum Befestigen bzw. Montieren von Anbauteilen an einer Karosserie, beispielsweise einer Karosserie eines Personenfahrzeugs. Die Anbauteile können Verkleidungsteile, Halter für Elektroleitungen, Fluidleitungen etc. sein. Die Befestigung soll dabei möglichst einfach erfolgen. In vielen Fällen soll die Befestigung auch wieder lösbar sein, ohne eine Zerstörung hervorzurufen. Schließlich sollen die Befestigungssysteme manchmal dazu in der Lage sein, Maßabweichungen auszugleichen.

Aus dem Dokument DE 10 2009 014 133 A1 ist ein Befestigungsclip zur Befestigung eines Bauteils an einem Bolzen eines Trägerteils bekannt, mit einem Grundkörper, der eine Öffnung zur Aufnahme des Bolzens hat, wobei die Öffnung eine Achse und quer zur Achse nebeneinanderliegend einen Befestigungsbereich und einen Entriegelungsbereich aufweist. Im Befestigungsbereich sind federnde Haltemittel zum Festhalten des Bolzens angeordnet, die so ausgebildet sind, dass der Bolzen in Richtung der Achse in den Befestigungsbereich eingeführt und der im Befestigungsbereich befindliche Bolzen durch eine Relativbewegung von Bolzen und Befestigungsclip quer zur Achse der Öffnung in den Entriegelungsbereich verlagert werden kann. Im Entriegelungsbereich ist der Bolzen aus der Öffnung herausnehmbar.

Das Dokument EP 3 499 057 A1 offenbart einen weiteren Clip, der auf einen Bolzen aufsetzbar ist. Eine Öffnung weist einen ersten und einen zweiten Abschnitt auf, die einer Montage bzw. einer Demontageposition zugeordnet sind.

Die Bolzen, die in derartigen Befestigungssystemen verwendet werden, können Gewindebolzen, sog. Pilzkopf-Bolzen, oder Ähnliches sein. Die Bolzen werden in der Regel durch ein sog. Bolzenschweißverfahren auf ein Karosserieblech aufgeschweißt oder werden aufgeklebt.

Es ist vor diesem Hintergrund eine Aufgabe der Erfindung, einen verbesserten Befestigungsclip, ein verbessertes Befestigungssystem sowie ein verbessertes Verfahren zum Montieren eines Bauteils an einem Bauteilträger anzugeben.

Die obige Aufgabe wird durch einen Befestigungclip gemäß Anspruch 1 gelöst, wobei der Befestigungsclip so ausgebildet ist, dass die axiale Nutbreite in einem elastisch unverformten Zustand des Befestigungsclips größer ist als dann, wenn ein Bolzen in der Bolzenaufnahme aufgenommen ist.

Vorzugsweise ist die Rastkontur und/oder das Rastmerkmal des Rastfingers so ausgebildet, dass eine Klemmkraft unter einem Krafteinleitungswinkel in den Rastfinger eingeleitet wird, der größer ist als Null, so dass eine radiale Kraftkomponente der Klemmkraft zu einer radialen elastischen Auslenkung eines Abschnittes des Befestigungsclips führt, so dass sich die axiale Nutbreite verringert.

Die obige Aufgabe wird ferner gelöst durch ein Befestigungssystem gemäß Anspruch 10, mit einem Bolzen, der axial auf eine Oberfläche eines Bauteilträgers fügbar ist, und mit einem Befestigungsclip der erfindungsgemäßen Art.

Schließlich wird die obige Aufgabe gelöst durch ein Verfahren zum Montieren eines Bauteils an einem Bauteilträger gemäß Anspruch 11, insbesondere unter Verwendung des erfindungsgemäßen Befestigungssystems, mit den Schritten, wenigstens einen Befestigungsclip an dem Bauteil vorab zu montieren, indem ein Bauteilabschnitt des Bauteils in eine Radialnut des Befestigungsclips eingeführt wird, das Bauteil mit dem vormontierten Befestigungsclip anschließend in Bezug auf einen Bolzen anzuordnen, der auf eine Oberfläche eines Bauteilträgers gefügt ist, und schließlich den Befestigungsclip zu montieren, wobei der Bolzen in eine Bolzenaufnahme des Befestigungsclips eingeschoben wird, wobei sich eine axiale Nutbreite der Radialnut verringert und der in die Radialnut eingeführte Bauteilabschnitt des Bauteils axial angedrückt wird.

Mit dem erfindungsgemäßen Befestigungsclip und dem erfindungsgemäßen Befestigungssystem kann erreicht werden, dass ein damit an einem Bauteilträger befestigtes Bauteil durch die Verformung des Befestigungsclips und die damit einhergehende Verringerung der axialen Nutbreite angedrückt und folglich klemmend gehalten wird. Die Gefahr eines unbeabsichtigten Lösens aufgrund von Vibrationen oder dergleichen wird verringert.

Anders herum ausgedrückt kann das Bauteil an dem Befestigungsclip vor dem Erreichen der endgültigen Montageposition, bei der der Bolzen in der Bolzenaufnahme aufgenommen ist, verschieblich sein, um beispielsweise Bauteil- und/oder Montagetoleranzen ausgleichen zu können.

In der endgültigen Montageposition umschließt die Radialnut folglich den Bauteilabschnitt auf kraftschlüssige Art und Weise und gewährleistet somit eine Verschiebesicherheit. Vorzugsweise führt bei dem Einschieben des Bolzens eine radial elastische Auslenkung eines Abschnittes des Grundkörpers dazu, dass die axiale Nutbreite verringert wird. Der Abschnitt des Grundkörpers, beispielsweise ein Seitenabschnitt, ist dabei in radialer Richtung weniger elastisch als der Rastfinger in Bezug auf den Grundkörper. Mit anderen Worten ist der Abschnitt des Grundkörpers steifer ausgebildet bzw. gelagert als der Rastfinger.

Um eine Auslenkungskraft in den Abschnitt des Grundkörpers einleiten zu können, wird eine Klemmkraft vorzugsweise so in den Rastfinger eingeleitet, dass eine radiale Kraftkomponente hiervon hinreichend ist, um den Abschnitt des Grundkörpers in radialer Richtung zumindest etwas auszulenken und damit die Haltekraft zum Erreichen des Kraftschlusses des Bauteilabschnittes innerhalb der Radialnut zu erzielen.

Der Bolzen ist vorzugsweise ein rotationssymmetrischer Bolzen. Von besonderem Vorzug ist es, wenn der Bolzen ein Pilzkopf-Bolzen ist, und/oder ein T-Bolzen, jedenfalls ein Bolzen, dessen Bolzenkopf einen größeren Durchmesser aufweist als der Bolzenschaft.

Der Bolzen ist vorzugsweise durch ein Fügeverfahren wie Schweißen oder Kleben auf den Bauteilträger gefügt.

Die Bolzenaufnahme kann so ausgebildet sein, dass der Befestigungsclip in axialer Richtung auf den Bolzen aufgedrückt wird, um den Befestigungsclip an dem Bolzen zu montieren. Hierbei wird der radial elastische Rastfinger radial ausgelenkt, bis ein Rastmerkmal hiervon vorzugsweise einen Bolzenkopf des Bolzens hintergreift.

In einer alternativen, in der Regel bevorzugten Ausführungsform ist die Bolzenaufnahme so ausgebildet, dass der Bolzen in einer Richtung parallel zur Oberfläche des Bauteilträgers in die Bolzenaufnahme eingeführt wird.

In beiden Fällen ist es vorzugsweise möglich, den Befestigungsclip zerstörungsfrei wieder von dem Bolzen zu entfernen, wobei die Demontagerichtung entgegengesetzt zu der Montagerichtung verläuft.

Die Aufgabe wird vollkommen gelöst.

Gemäß einer besonders bevorzugten Ausführungsform ist der Rastfinger mit einem Seitenabschnitt des Grundkörpers verbunden, wobei der Seitenabschnitt elastisch verschwenkbar in Bezug auf einen Zentralabschnitt des Grundkörpers ausgebildet ist und wobei der Seitenabschnitt zumindest einen Abschnitt von einer Radialfläche der Rastnut bildet.

Durch diese Maßnahme kann eine in den Seitenabschnitt eingeleitete Radialkraft unmittelbar dazu führen, dass die axiale Nutbreite verringert wird, um die Haltekraft zu erreichen.

Gemäß einer bevorzugten Ausführungsform ist dabei der Rastfinger mit dem Seitenabschnitt im Bereich von einem ersten axialen Ende des Grundkörpers verbunden und erstreckt sich schräg in Bezug auf die Längsachse.

Auf diese Weise ist es möglich, eine Kraft schräg in den Rastfinger einzuleiten, deren radiale Kraftkomponente dann zu einer radialen Auslenkung des Seitenabschnittes führen kann.

Der Rastfinger erstreckt sich dabei vorzugsweise von dem ersten axialen Ende schräg nach innen in Richtung der Bolzenaufnahme, und zwar in Richtung hin zu einem zweiten axialen Ende. Das erste axiale Ende ist vorzugsweise jenes, das dem Bauteilträger zugewandt ist.

Der Winkel, unter dem sich der Rastfinger schräg in Bezug auf die Längsachse erstreckt, kann in einem Bereich von 5° bis 40° liegen, insbesondere in einem Bereich von 5° bis 20°.

Gemäß einer weiteren bevorzugten Ausführungsform ist wenigstens eine axial elastisch verformbare Andruckzunge mit dem Grundkörper verbunden und ragt gegenüber einem ersten axialen Ende des Grundkörpers vor.

Die Andruckzunge ist dazu ausgebildet, den Befestigungsclip axial in den Eingriff des Rastmerkmals an der Rastkontur zu drücken, also beispielsweise eine Rastnase des Rastfingers von unten oder schräg unten gegen eine Rastkontur des Bolzens zu drücken. Die Rastkontur kann beispielsweise durch die Unterseite eines Bolzenkopfes gebildet sein.

Die Andruckzunge kann auch zum Ausgleichen von Montage- oder Bauteiltoleranzen dienen.

Gemäß einer weiteren bevorzugten Ausführungsform ist wenigstens eine axial elastisch verformbare Haltezunge mit dem Grundkörper verbunden und ragt in einen Bereich einer radialen Projektion der Radialnut.

Mit anderen Worten drückt die Haltezunge gegen den Bauteilabschnitt, wenn ein radial ausgerichteter Bauteilabschnitt des Bauteils in die Radialnut greift.

Durch diese Maßnahme kann eine gewisse Haltekraft zwischen dem Befestigungsclip und dem Bauteil auch bereits dann eingerichtet werden, wenn der Befestigungsclip nur an dem Bauteil vormontiert ist, also noch kein Bolzen in die Bolzenaufnahme eingeführt ist. Mit anderen Worten kann die Haltezunge zur Vorpositionierung dienen und/oder zur Verliersicherung.

Generell ist es denkbar, dass der Grundkörper im Wesentlichen rotationssymmetrisch ausgebildet ist.

Von besonderem Vorzug ist es jedoch, wenn der Grundkörper kastenartig und im Wesentlichen symmetrisch in Bezug auf eine axial durch die Längsachse verlaufende Ebene ausgebildet ist.

Bei dieser Ausführungsform ist es bevorzugt, wenn der Befestigungsclip radial auf den Bolzen aufgeschoben wird.

Durch die Symmetrieform weist der Befestigungsclip dabei vorzugsweise zwei der Symmetrieebene gegenüberliegende Seitenabschnitte auf, zwischen denen die Bolzenaufnahme ausgebildet ist.

Ferner weist der Befestigungsclip vorzugsweise zwei Rastfinger auf, die symmetrisch auf radial gegenüberliegenden Seiten des Bolzens an diesem angreifen können. Ferner weist der Befestigungsclip vorzugsweise zwei Andruckzungen auf, die sich in gegenüber der Symmetrieebene verschiedene Richtungen erstrecken. In entsprechender Weise weist der Befestigungsclip vorzugsweise zwei Haltezungen auf, die parallel zu der Symmetrieebene ausgebildet sind.

Ferner ist der Befestigungsclip vorzugsweise dazu ausgebildet, zwei auf gegenüberliegenden Seiten der Symmetrieebene angeordnete, symmetrisch ausgebildete Radialnuten zu bilden, die jeweils einen Bauteilabschnitt eines Bauteils aufnehmen können. Das Bauteil kann folglich verkippsicher in Bezug auf den Befestigungsclip gehalten werden und kann in Längserstreckung (parallel zu der Symmetrieebene) verschieblich in Bezug auf die Radialnuten sein. Die Verschieberichtung ist vorzugsweise quer zu der Längsachse und quer zu einer Radialrichtung ausgerichtet, in der der Rastfinger gegen den Bolzen angedrückt wird.

Ferner ist es insgesamt vorteilhaft, wenn der Bolzen einen Bolzenschaft und einen Bolzenkopf aufweist, dessen Durchmesser größer ist als jener des Bolzenschaftes, wobei der Bolzenkopf auf seiner zu dem Bolzenschaft weisenden axialen Seite die Rastkontur bildet.

Schließlich ist es vorteilhaft, wenn der Seitenabschnitt über einen Schwächungsbereich mit dem Zentralabschnitt verbunden ist, so dass der Schwächungsbereich eine Schwenkachse für den Seitenabschnitt bildet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Querschnittsansicht eines erfindungsgemäßen Befestigungssystems mit einem an einem Bauteilträger montierten Bauteil;
- Fig. 2: eine perspektivische Darstellung von schräg oben eines Befestigungsclips des Befestigungssystems der Fig. 1;
- Fig. 3: eine Ansicht des Befestigungsclips der Fig. 2 von schräg unten;
- Fig. 4: eine perspektivische Ansicht des Befestigungsclips der Fig. 2 und 3 in einer perspektivischen Ansicht von schräg hinten, wobei der Befestigungsclip an einem Bauteil vormontiert ist;
- Fig. 5: eine schematische Schnittansicht des Befestigungssystems der Fig. 1;
- Fig. 6: eine perspektivische Ansicht einer weiteren Ausführungsform eines erfindungsgemäßen Befestigungsclips; und
- Fig. 7: eine Darstellung eines an einem Bauteilträger mittels eines weiteren Befestigungssystems befestigten Bauteils, wobei das weitere Befestigungssystem den Befestigungsclip der Fig. 6 beinhaltet.

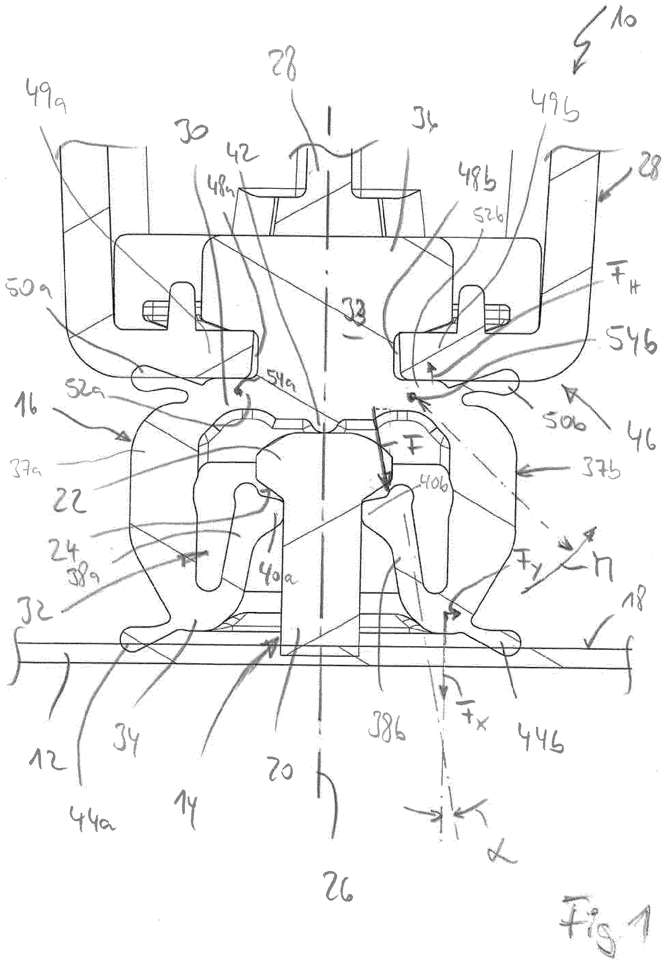

In den Fig. 1 bis 5 ist eine erste Ausführungsform eines Befestigungssystems 10 dargestellt. Das Befestigungssystem 10 dient zum Befestigen eines Bauteils an einem Bauteilträger.

In Fig. 1 ist ein Bauteilträger 12 schematisch als ein flächiges Element dargestellt, beispielsweise in Form eines Karosserieblechs. Auf den Bauteilträger 12 ist ein Bolzen 14 gefügt, derart, dass der Bolzen 14 senkrecht gegenüber einer Oberfläche 18 des Bauteilträgers 12 vorsteht. Das Fügeverfahren kann ein Schweißverfahren oder ein Klebeverfahren sein, um ein Beispiel zu nennen.

Das Befestigungssystem 10 beinhaltet neben dem Bolzen 14 einen Befestigungsclip 16. Der Befestigungsclip 16 ist vorzugsweise ein einstückiges Bauteil aus Kunststoff, das beispielsweise in einem Spritzgussverfahren hergestellt ist.

Der Bolzen 14 beinhaltet einen Bolzenschaft 20 und einen Bolzenkopf 22. Der Bolzenkopf 22 ist an dem dem Bauteilträger 12 entgegengesetzten axialen Ende des Bolzenschaftes 20 vorgesehen und weist einen größeren Außendurchmesser auf als der Bolzenschaft 20.

Eine Unterseite des Bolzenkopfes 22 ist als Rastkontur 24 ausgebildet.

Der Begriff des "Rastens" ist vorliegend breit zu verstehen und beinhaltet generell, dass sich Elemente gegenseitig abstützen können.

Der Befestigungsclip 16 ist in Fig. 1 an dem Bolzen 14 festgelegt. Eine Längsachse 26 ist vorzugsweise eine Längsachse des Bolzens 14 als auch eine Längsachse des Befestigungsclips 16.

Wie erwähnt, dient das Befestigungssystem 10 zum Befestigen eines Bauteils 28 an dem Bauteilträger 12. Das Bauteil 28 ist vorliegend als Anbauteil dargestellt, das zwei L-förmige Schenkel aufweist, die von einer nicht näher bezeichneten Basis des Bauteils 28 vorstehen und dazu ausgelegt sind, mit dem Befestigungsclip 16 zusammenzuwirken, um an diesem befestigt zu werden.

Der Befestigungsclip 16 beinhaltet einen Grundkörper 30, der eine Bolzenaufnahme 32 definiert.

Der Grundkörper 30 weist ein erstes axiales Ende 34 und ein zweites axiales Ende 36 auf. Ein Zentralabschnitt 33 des Grundkörpers 30 ist im Bereich des zweiten axialen Endes 36 vorgesehen, das auf der dem Bauteilträger 12 abgewandten Seite des Befestigungsclips 16 angeordnet ist.

Von dem Zentralabschnitt 33 erstrecken sich vorliegend zwei Seitenabschnitte 37a, 37b, und zwar auf radial gegenüberliegenden Seiten des Bolzens 14 bzw. der Bolzenaufnahme 32.

Der Grundkörper 30 ist vorliegend generell kastenförmig ausgebildet und ist im Wesentlichen spiegelsymmetrisch zu einer Ebene ausgebildet, die durch die Längsachse 26 verläuft. Die Seitenabschnitte 37a, 37b sind spiegelbildlich auf gegenüberliegenden Seiten dieser Ebene angeordnet.

Der Befestigungsclip 16 weist ferner vorliegend zwei Rastfinger 38a, 38b auf. Die Rastfinger sind jeweils mit einem zugeordneten Seitenabschnitt 37a, 37b verbunden, und zwar im Bereich des ersten axialen Endes 34 des Grundkörpers 30. Die Rastfinger 38a, 38b erstrecken sich ausgehend von dem ersten axialen Ende 34 hin zu dem zweiten axialen Ende 36, und zwar schräg zu der Längsachse 26. Genauer gesagt sind die Rastfinger 38a, 38b jeweils unter einem Winkel α zu der Längsachse 26 ausgerichtet, wobei der Winkel beispielsweise in einem Bereich von 5° bis 40° liegen kann, insbesondere in einem Bereich von 5° bis 20°.

An den freien Enden weisen die Rastfinger 38a, 38b jeweils eine Rastnase 40a, 40b auf. Die Rastmerkmale in Form von Rastnasen 40a, 40b greifen an der Rastkontur 24 an, wenn der Bolzen 14 in der Bolzenaufnahme 32 angeordnet ist und halten auf diese Weise den Befestigungsclip 16 in axialer Richtung. Mit anderen Worten kann der Befestigungsclip 16 in der in Fig. 1 gezeigten Darstellung nicht axial abgezogen werden. Die Rastkontur 24 ist dabei etwas geneigt ausgerichtet, so dass sehr große axiale Abzugskräfte ggf. dazu führen können, dass die Rastfinger 38a, 38b radial so weit ausgelenkt werden, bis sie in Anlage an die Seitenabschnitte 37a, 37b gelangen und dann den Bolzenkopf 22 freigeben. Derartige Abzugskräfte sind jedoch in der normalen Anwendung des Befestigungssystems nicht vorgesehen. Beispielsweise bei Verwendung in einem Auto kommen derartige Abzugskräfte nicht vor, weder durch Vibrationen noch durch sonstige Kräfte. Wenn jedoch der Befestigungsclip mit Gewalt abgezogen wird, kann hierdurch ggf. verhindert werden, dass der Bolzen 14 aus dem Bauteilträger 12 herausgerissen wird.

Wie es in Fig. 1 zu erkennen ist, ist an dem Zentralabschnitt 33 des Grundkörpers 30 ein Axialanschlag 42 ausgebildet, an dem eine Oberseite des Bolzenkopfes 22 aufliegt.

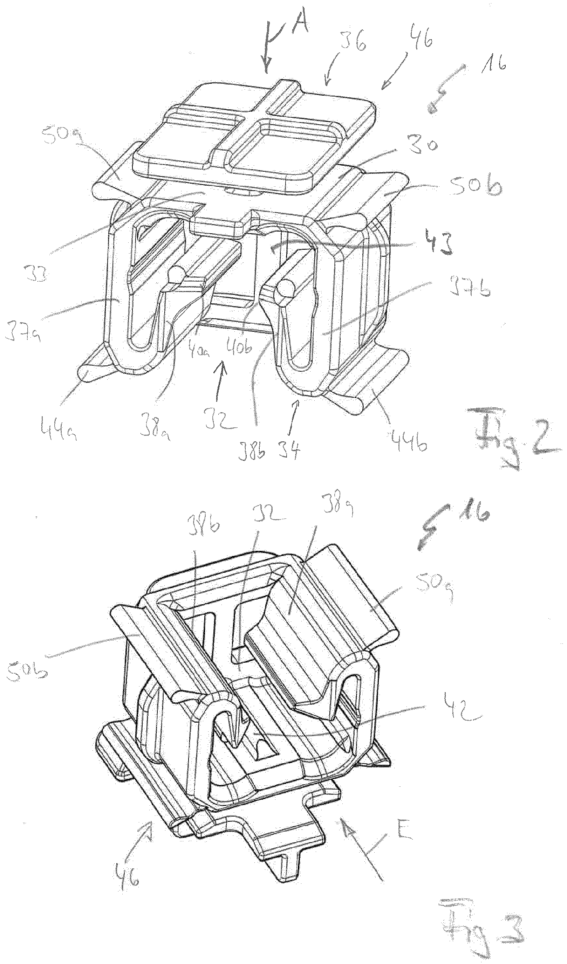

Wie es insbesondere in Fig. 2 zu erkennen ist, sind die zwei Seitenabschnitte 37a, 37b an einem Querende über einen mit Öffnungen versehenen Abschlussabschnitt 43 verbunden. Hierdurch erhalten die Seitenabschnitte 37a, 37b eine gewisse Stabilität in radialer Richtung. Ferner kann der Bolzen 14 auf diese Weise nur von einer Seite, nämlich von dem in Fig. 2 vorne gezeigten offenen Querende der Seitenabschnitte 37a, 37b in die Bolzenaufnahme 32 eingeschoben werden, und zwar im Wesentlichen in einer Richtung parallel zu der Oberfläche 18 des Bauteilträgers 12. Andererseits ist es auch möglich, den Befestigungsclip axial auf den Bolzen 14 aufzudrücken, so dass die Rastzungen 38 radial ausgelenkt werden und schließlich den Bolzenkopf 22 zwischen den Rastnasen 40 hindurchlassen, bis diese die Rastkontur 24 hintergreifen.

Der Befestigungsclip 16 weist ferner zwei Andruckzungen 44a, 44b auf, die sich im Bereich des ersten axialen Endes 34 von den jeweiligen Seitenabschnitten 37a, 37b erstrecken, und zwar radial nach außen nach der Art von Flügeln.

Die Andruckzungen 44a, 44b ragen gegenüber dem ersten axialen Ende 34 des Grundkörpers 30 vor und sind in der Befestigungsposition, die in Fig. 1 gezeigt ist, axial ausgelenkt. Dies ist in Fig. 1 dadurch angedeutet, dass die Andruckzungen 44a, 44b überschneidend mit dem Bauteilträger 12 dargestellt sind.

Der Befestigungsclip 16 weist ferner eine Bauteilaufnahme 46 auf, an der ein Bauteil 28 an dem Befestigungsclip 16 festlegbar ist.

Die Bauteilaufnahme 46 weist zwei spiegelbildlich angeordnete Radialnuten 48a, 48b auf, die parallel zu der Symmetrieebene ausgerichtet sind. In den Radialnuten 48a, 48b ist jeweils ein Bauteilabschnitt 49a, 49b des Bauteils 28 aufgenommen. Die Bauteilabschnitte 49a, 49b können dabei durch aufeinander zu weisende Abschnitte von zwei L-Schenkeln des Bauteils 28 ausgebildet sein.

An einer Oberseite der Seitenabschnitte 37a, 37b sind zwei Haltezungen 50a, 50b vorgesehen, die jeweils in einen Bereich einer radialen Projektion der jeweiligen Radialnuten 48a, 48b ragen. In Fig. 1 ist dargestellt, dass die Bauteilabschnitte 49a, 49b in die Radialnuten 48a, 48b eingesetzt sind. Die Haltezungen 50a, 50b überschneiden sich in der Darstellung mit den Bauteilabschnitten 49a, 49b, werden in der Realität jedoch von diesen axial elastisch ausgelenkt bzw. verformt. Die Haltezungen 50a, 50b können dazu dienen, einen Befestigungsclip 16 an einem Bauteil 28 vorzumontieren. Die L-Schenkel des Bauteils 28 bilden vorzugsweise eine Art Schiene, die sich parallel zu der Symmetrieebene erstreckt, derart, dass der Befestigungsclip 16 parallel zu dieser Ebene an dem Bauteil 28 verschieblich gelagert ist. Die Haltezungen 50a, 50b dienen dazu, einen in das Bauteil 28 eingesetzten Befestigungsclip 16 temporär zu halten, bis eine genaue Lage mittels des zugeordneten Bolzens 14 eingerichtet ist.

Wie es in Fig. 1 ferner zu erkennen ist, sind die Seitenabschnitte 37a, 37b über Schwächungsbereiche 52a, 52b mit dem Zentralabschnitt 33 verbunden. Hierdurch ist es möglich, die Seitenabschnitte 37a, 37b radial von dem Bolzen 14 weg etwas auszulenken. Ein durch den Schwächungsbereich 52 eingerichtetes Gelenk 54a, 54b ist in Fig. 1 schematisch durch einen Punkt angedeutet.

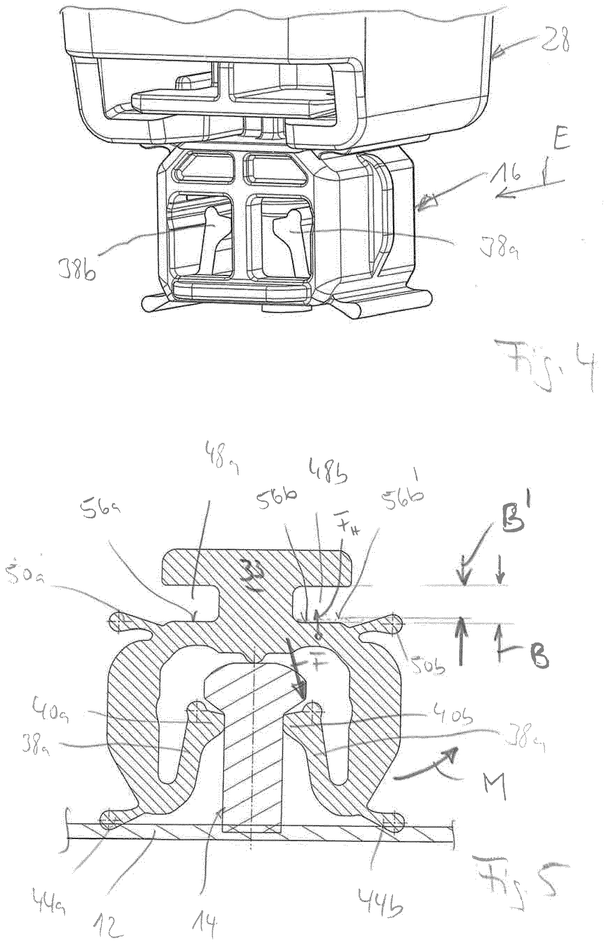

Ferner ist zu erkennen, dass die Seitenabschnitte 37a, 37b auf ihrer Oberseite eine Radialfläche 56a, 56b bilden, wie es in Fig. 5 zu sehen ist.

Die Radialflächen 56a, 56b bilden eine Seitenfläche der Radialnuten 48a, 48b. Eine gegenüberliegende Seitenfläche der Radialnuten 48a, 48b ist durch einen radial vorstehenden Abschnitt (nicht näher bezeichnet) des Zentralabschnittes 33 gebildet.

Wie es insbesondere in den Fig. 1 und 5 dargestellt ist, wirkt auf die Rastfinger 38a, 38b eine Klemmkraft F, die im Wesentlichen unter dem oben beschriebenen Winkel α in Bezug auf die Längsachse 26 ausgerichtet sein kann.

Wie es in Fig. 1 dargestellt ist, beinhaltet die in die Rastfinger 38a, 38b (in Fig. 1 ist nur die Kraft auf den Rastfinger 38b gezeigt) eingeleitete Kraft eine axiale Kraftkomponente Fₓ, die zur Klemmung beiträgt, sowie eine radiale Kraftkomponente F_{y}. Die radiale Kraftkomponente F_{y} wirkt radial nach außen auf die Seitenabschnitte 37a, 37b und erzeugt um das Gelenk 54a, 54b ein Moment M, das ebenfalls nur in Bezug auf den Seitenabschnitt 37b dargestellt ist.

Durch das Drehmoment M wird der jeweilige Seitenabschnitt 37a, 37b radial nach außen von dem Bolzen 14 weg ausgelenkt. Dies führt dazu, dass eine ursprünglich (im nicht ausgelenkten Zustand der Seitenabschnitte 37a, 37b) eingerichtete axiale Nutbreite B der Radialnuten 48a, 48b verkleinert wird, und zwar auf einen Wert B', wie es in Fig. 5 schematisch angedeutet ist.

Durch diese Verkleinerung der axialen Nutbreite wirkt eine Haltekraft F_{H} auf eine in die jeweilige Radialnut 48 eingesetzte Komponente, vorliegend auf den eingeführten Bauteilabschnitt 49a, 49b (in Fig. 5 nicht dargestellt).

Folglich kann mit dem Befestigungssystem 10 ein Verfahren zum Montieren eines Bauteils 28 an einen Bauteilträger 12 durchgeführt werden. Dabei wird wenigstens ein Befestigungsclip 16 vorab an dem Bauteil 28 montiert, wobei ein Bauteilabschnitt 49 des Bauteils 28 in eine Radialnut 48 des Befestigungsclips 16 eingeführt wird. Anschließend wird das Bauteil 28 mit dem vormontierten Befestigungsclip 16 in Bezug auf einen Bolzen 14 angeordnet, der auf eine Oberfläche 18 eines Bauteilträgers 12 gefügt ist. Anschließend wird der Befestigungsclip 16 montiert, wobei der Bolzen 14 in eine Bolzenaufnahme 32 des Bolzenclips eingeschoben wird (parallel zu der Oberfläche 18 oder senkrecht hierzu). Hierdurch verringert sich die axiale Nutbreite von einem Ausgangswert B zu einem kleineren Wert B'. Folglich wird der in die Radialnut 48 eingeführte Bauteilabschnitt 49 des Bauteils 48 axial angedrückt und klemmend gehalten.

In Fig. 3 und Fig. 4 ist die Einführrichtung E des Bolzens 14 in die Bolzenaufnahme 32 des Befestigungsclips 16 gezeigt. In Fig. 2 ist die alternative Aufdrückrichtung A

Es versteht sich, dass bei Bedarf eine Sicherungskontur bzw. Rastkontur vorgesehen sein kann, die verhindert, dass ein Bolzen kraftlos aus der Bolzenaufnahme herausgeschoben werden kann, entgegen der Einführrichtung E.

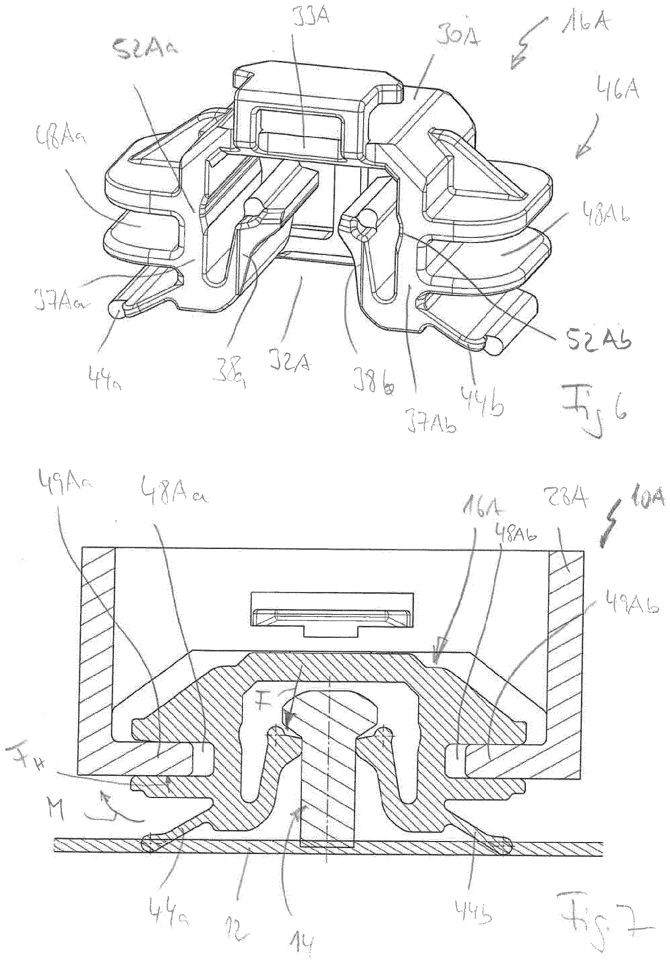

In den Fig. 6 und 7 ist eine weitere Ausführungsform eines Befestigungssystems 10A gezeigt, das einen Befestigungsclip 16A verwendet.

Das Befestigungssystem 10A und der Befestigungsclip 16A entsprechen hinsichtlich Aufbau und Funktionsweise generell dem Befestigungssystem 10 bzw. dem Befestigungsclip 16 der Fig. 1 bis 5. Gleiche Elemente sind daher durch gleiche Bezugszeichen gekennzeichnet. Im Folgenden werden im Wesentlichen die Unterschiede erläutert.

Bei dem Befestigungsclip 16A, der in den Fig. 6 und 7 gezeigt ist, ist eine Radialnut 48Aa, 48Ab an einer Außenseite der jeweiligen Seitenabschnitte 37Aa, 37Ab vorgesehen. Die Radialnuten 48Aa, 48Ab werden gebildet durch radial nach außen vorstehende Vorsprünge, wobei der obere Vorsprung durch eine Rippe gegenüber einer Aufbiegung in Bezug auf den Seitenabschnitt versteift ist.

Wie es in Fig. 7 gezeigt ist, führt die in den Rastfinger eingeführte Klemmkraft F wie bei der Ausführungsform der Fig. 1 bis 5 dazu, dass ein Moment erzeugt wird, mittels dessen die Seitenabschnitte 37Aa, 37Ab radial nach außen weggebogen werden. Hierbei werden die jeweiligen unteren Vorsprünge nach oben ausgelenkt, so dass eine Haltekraft F_{H} auf einen Bauteilabschnitt 49Aa, 49Ab ausgeübt wird, der in die jeweilige Radialnut 48Aa, 48Ab eingeführt ist.

### Bezugszeichenliste

- 10: Befestigungssystem
- 12: Bauteilträger (Blech)
- 14: Bolzen
- 16: Befestigungsclip
- 18: Oberfläche 12
- 20: Bolzenschaft 14
- 22: Bolzenkopf 14
- 24: Rastkontur 14
- 26: Längsachse/Bolzenachse (Symmetrieebene)
- 28: Bauteil
- 30: Grundkörper
- 32: Bolzenaufnahme
- 33: Zentralabschnitt
- 34: 1. axiales Ende 30
- 36: 2. axiales Ende 30
- 37a/b: Seitenabschnitt
- 38a/b: Rastfinger
- 40a/b: Rastmerkmal (Nase)
- 42: Axialanschlag
- 43: Abschussabschnitt
- 44a/b: Andruckzunge
- 46: Bauteilaufnahme
- 48a/b: Radialnut (Seitennut)
- 49a/b: Bauteilabschnitt
- 50a/b: Haltezunge
- 52: Schwächungsbereich
- 54: Gelenk/Schwenkachse
- 56: Radialfläche 48

- F: Klemmkraft
- α: Krafteinleitungswinkel
- Fₓ: axiale Kraftkomponente
- F_{y}: radiale Kraftkomponente
- F_{H}: Haltekraft
- M: Moment
- B: axiale Nutbreite
- E: Einschubrichtung
- A: Aufdrückrichtung

## Patentansprüche

1. Befestigungsclip (16) für ein Befestigungssystem (10) zum Befestigen eines Bauteils (28) an einem Bauteilträger (12), wobei von einer Oberfläche (18) des Bauteilträgers (12) ein Bolzen vorsteht, mit
- einem Grundkörper (30), der eine Bolzenaufnahme (32) bildet, die eine Längsachse (26) definiert und die so ausgebildet ist, dass der Befestigungsclip (16) auf den Bolzen (14) aufgeschoben werden kann,
- wenigstens einem radial elastischen Rastfinger (38), der mit dem Grundkörper (30) verbunden ist und der in die Bolzenaufnahme (32) ragt, wobei der Rastfinger (38) ein Rastmerkmal (40) aufweist, das dazu ausgebildet ist, an einer Rastkontur (24) des Bolzens (14) anzugreifen, um den Befestigungsclip (16) an dem Bauteilträger (12) festzulegen, und
- wenigstens einer Bauteilaufnahme (46), in der zumindest ein Bauteilabschnitt (49) eines zu befestigenden Bauteils (28) aufnehmbar ist, wobei die Bauteilaufnahme (46) eine Radialnut (48) aufweist, die eine axiale Nutbreite (B) definiert,
**dadurch gekennzeichnet, dass** der Befestigungsclip (16) so ausgebildet ist, dass die axiale Nutbreite (B) in einem elastisch unverformten Zustand des Befestigungsclips (16) größer ist als dann, wenn ein Bolzen (14) in der Bolzenaufnahme (32) aufgenommen ist.

2. Befestigungsclip nach Anspruch 1, wobei der Rastfinger (38) mit einem Seitenabschnitt (37) des Grundkörpers (30) verbunden ist, der elastisch verschwenkbar in Bezug auf einen Zentralabschnitt (33) des Grundkörpers (30) ausgebildet ist, wobei der Seitenabschnitt (37) zumindest einen Abschnitt von einer Radialfläche (56) der Radialnut (48) bildet.

3. Befestigungsclip nach Anspruch 2, wobei der Rastfinger (38) mit dem Seitenabschnitt (37) im Bereich von einem ersten axialen Ende (34) des Grundkörpers (30) verbunden ist und sich schräg in Bezug auf die Längsachse (26) erstreckt.

4. Befestigungsclip nach einem der Ansprüche 1 - 3, wobei wenigstens eine axial elastisch verformbare Andruckzunge (44) mit dem Grundkörper (30) verbunden ist und gegenüber einem ersten axialen Ende (34) des Grundkörpers (30) vorragt.

5. Befestigungsclip nach einem der Ansprüche 1 - 4, wobei wenigstens eine axial elastisch verformbare Haltezunge (50) mit dem Grundkörper (30) verbunden ist und in einen Bereich einer radialen Projektion der Radialnut (48) ragt.

6. Befestigungsclip nach einem der Ansprüche 1 - 5, wobei der Grundkörper (30) kastenartig und im Wesentlichen symmetrisch in Bezug auf eine axial durch die Längsachse (26) verlaufende Ebene ausgebildet ist.

7. Befestigungsclip nach einem der Ansprüche 1 - 6, wobei der Bolzen (14) einen Bolzenschaft (20) und einen Bolzenkopf (22) aufweist, dessen Durchmesser größer ist als jener des Bolzenschaftes (20), wobei der Bolzenkopf (22) auf seiner zu dem Bolzenschaft (20) weisenden axialen Seite die Rastkontur (24) bildet.

8. Befestigungsclip nach einem der Ansprüche 1 - 7, wobei die Rastkontur (24) und/oder das Rastmerkmal (40) des Rastfingers (38) so ausgebildet ist bzw. sind, dass eine Klemmkraft (F) unter einem Krafteinleitungswinkel (α) in den Rastfinger (38) eingeleitet wird, der größer ist als Null, so dass eine radiale Kraftkomponente (F_{y}) der Klemmkraft (F) zu einer radialen elastischen Auslenkung eines Abschnittes (37) des Befestigungsclips (16) führt, so dass sich die axiale Nutbreite (B) verringert.

9. Befestigungsclip nach einem der Ansprüche 2 - 8, wobei der Seitenabschnitt (37) über einen Schwächungsbereich (52) mit dem Zentralabschnitt (33) verbunden ist, so dass der Schwächungsbereich (52) eine Schwenkachse (54) für den Seitenabschnitt bildet.

10. Befestigungssystem mit einem Bolzen (14), der auf eine Oberfläche (18) eines Bauteilträgers (12) fügbar ist, und mit einem Befestigungsclip (16) nach einem der Ansprüche 1 - 9.

11. Verfahren zum Montieren eines Bauteils (28) an einem Bauteilträger (12), insbesondere unter Verwendung des Befestigungssystems (10) nach Anspruch 10, mit den Schritten:
- Vorabmontieren wenigstens eines Befestigungsclips (16) an dem Bauteil (28), indem ein Bauteilabschnitt (49) des Bauteils (28) in eine Radialnut (48) des Befestigungsclips (16) eingeführt wird;
- Anordnen des Bauteils (28) mit dem vormontierten Befestigungsclip (16) in Bezug auf einen Bolzen (14), der auf eine Oberfläche (18) eines Bauteilträgers (12) gefügt ist, und
- Montieren des Befestigungsclips (16), wobei der Bolzen (14) in eine Bolzenaufnahme (32) des Befestigungsclips (16) eingeschoben wird, wobei sich eine axiale Nutbreite (B) der Radialnut (48) verringert und der in die Radialnut (48) eingeführte Bauteilabschnitt (49) des Bauteils (28) axial angedrückt wird.

## Claims

1. Fastening Clip (16) for a fastening system (10) for fastening a component (28) to a component carrier (12), where a stud protrudes from a surface (18) of the component carrier (12), comprising
- a base body (30) forming a stud receptacle (32) that defines a longitudinal axis (26) and is designed so that the fastening clip (16) can be pushed onto the stud (14),
- at least one radially elastic locking finger (38) connected to the base body (30) and protruding into the stud receptacle (32), wherein the locking finger (38) has a locking feature (40) designed to engage with a locking contour (24) of the stud (14) to secure the fastening clip (16) to the component carrier (12), and
- at least one component receptacle (46) in which at least a component portion (49) of a component (28) to be fastened can be received, wherein the component receptacle (46) has a radial groove (48) defining an axial groove width (B),
**characterized in that** the fastening clip (16) is designed so that the axial groove width (B) in an elastically undeformed state of the fastening clip (16) is greater than when a stud (14) is received in the stud receptacle (32).

2. Fastening clip according to claim 1, wherein the locking finger (38) is connected to a side portion (37) of the base body (30), which is elastically pivotable relative to a central portion (33) of the base body (30), where the side portion (37) forms at least a portion of a radial surface (56) of the radial groove (48).

3. Fastening clip according to claim 2, wherein the locking finger (38) is connected to the side portion (37) in the area of a first axial end (34) of the base body (30) and extends obliquely with respect to the longitudinal axis (26).

4. Fastening clip according to one of claims 1 to 3, where at least one axially elastically deformable pressure tongue (44) is connected to the base body (30) and projects relative to a first axial end (34) of the base body (30).

5. Fastening clip according to one of claims 1 to 4, where at least one axially elastically deformable holding tongue (50) is connected to the base body (30) and extends into an area of a radial projection of the radial groove (48).

6. Fastening clip according to one of claims 1 to 5, where the base body (30) is box-like and substantially symmetrical with respect to a plane running axially through the longitudinal axis (26).

7. Fastening clip according to one of claims 1 to 6, where the stud (14) has a stud shank (20) and a stud head (22) with a diameter larger than that of the stud shank (20), where the stud head (22) forms the locking contour (24) on its axial side facing the stud shank (20).

8. Fastening clip according to one of claims 1 to 7, where the locking contour (24) and/or the locking feature (40) of the locking finger (38) is/are designed so that a clamping force (F) is introduced into the locking finger (38) at a force introduction angle (α) greater than zero, so that a radial force component (Fy) of the clamping force (F) leads to a radial elastic deflection of a portion (37) of the fastening clip (16), so as to reduce the axial groove width (B).

9. Fastening clip according to one of claims 2 to 8, where the side portion (37) is connected to the central portion (33) via a weakening area (52) forming a pivot axis (54) for the side portion.

10. Fastening system comprising a stud (14) that can be attached to a surface (18) of a component carrier (12), and a fastening clip (16) according to one of claims 1 to 9.

11. Method for mounting a component (28) to a component carrier (12), particularly using the fastening system (10) according to claim 10, comprising the steps of
- pre-assembling at least one fastening clip (16) to the component (28) by inserting a component portion (49) of the component (28) into a radial groove (48) of the fastening clip (16);
- positioning the component (28) with the pre-assembled fastening clip (16) relative to a stud (14) joined onto a surface (18) of a component carrier (12); and
- mounting the fastening clip (16) by inserting the stud (14) into a stud receptacle (32) of the fastening clip (16), wherein an axial groove width (B) of the radial groove (48) is reduced and the component portion (49) of the component (28) introduced into the radial groove (48) is axially pressed on.

## Revendications

1. Attache de fixation (16) pour un système de fixation (10) pour la fixation d'un composant (28) à un support pour composant (12), dans laquelle un boulon dépasse d'une surface (18) du support pour composant (12), comportant
- un corps de base (30) qui forme un logement pour boulon (32) qui définit un axe longitudinal (26) et qui est conçu de sorte que l'attache de fixation (16) peut être enfoncée sur le boulon (14),
- au moins un doigt d'encliquetage (38) radialement élastique qui est relié au corps de base (30) et qui fait saillie dans le logement pour boulon (32), dans laquelle le doigt d'encliquetage (38) présente un moyen caractéristique d'encliquetage (40) qui est conçu pour venir en prise avec un contour d'encliquetage (24) du boulon (14) afin d'immobiliser l'attache de fixation (16) sur le support pour composant (12), et
- au moins un logement pour composant (46) dans lequel au moins une section de composant (49) d'un composant (28) à fixer peut être reçue, dans laquelle le logement pour composant (46) présente une rainure radiale (48) qui définit une largeur de rainure axiale (B),
**caractérisée en ce que** l'attache de fixation (16) est conçue de sorte que la largeur de rainure axiale (B), dans un état non déformé élastiquement de l'attache de fixation (16), est plus grande que lorsqu'un boulon (14) est reçu dans le logement pour boulon (32).

2. Attache de fixation selon la revendication 1, dans laquelle le doigt d'encliquetage (38) est relié à une section latérale (37) du corps de base (30) qui est conçue de manière à pouvoir pivoter élastiquement par rapport à une section centrale (33) du corps de base (30), dans laquelle la section latérale (37) forme au moins une section d'une surface radiale (56) de la rainure radiale (48).

3. Attache de fixation selon la revendication 2, dans laquelle le doigt d'encliquetage (38) est relié à la section latérale (37) dans la zone d'une première extrémité axiale (34) du corps de base (30) et s'étend obliquement par rapport à l'axe longitudinal (26).

4. Attache de fixation selon l'une des revendications 1 à 3, dans laquelle au moins une languette de pression (44) élastiquement déformable axialement est reliée au corps de base (30) et fait saillie par rapport à une première extrémité axiale (34) du corps de base (30).

5. Attache de fixation selon l'une des revendications 1 à 4, dans laquelle au moins une languette de retenue (50) élastiquement déformable axialement est reliée au corps de base (30) et fait saillie dans une zone d'une projection radiale de la rainure radiale (48).

6. Attache de fixation selon l'une des revendications 1 à 5, dans laquelle le corps de base (30) est en forme de boîte et est sensiblement symétrique par rapport à un plan passant axialement par l'axe longitudinal (26).

7. Attache de fixation selon l'une des revendications 1 à 6, dans laquelle le boulon (14) présente une tige de boulon (20) et une tête de boulon (22) dont le diamètre est supérieur à celui de la tige de boulon (20), dans laquelle la tête de boulon (22) forme le contour d'encliquetage (24) sur son côté axial orienté vers la tige de boulon (20).

8. Attache de fixation selon l'une des revendications 1 à 7, dans laquelle le contour d'encliquetage (24) et/ou le moyen caractéristique d'encliquetage (40) du doigt d'encliquetage (38) sont conçus de sorte qu'une force de serrage (F) est introduite dans le doigt d'encliquetage (38) sous un angle d'introduction de force (α) supérieur à zéro, de sorte qu'une composante de force radiale (F_{y}) de la force de serrage (F) entraîne une déviation élastique radiale d'une section (37) de l'attache de fixation (16), de sorte que la largeur de rainure axiale (B) diminue.

9. Attache de fixation selon l'une des revendications 2 à 8, dans laquelle la section latérale (37) est reliée à la section centrale (33) par l'intermédiaire d'une zone d'affaiblissement (52), de sorte que la zone d'affaiblissement (52) forme un axe de pivotement (54) pour la section latérale.

10. Système de fixation comportant un boulon (14) qui peut être installé sur une surface (18) d'un support pour composant (12), et comportant une attache de fixation (16) selon l'une des revendications 1 à 9.

11. Procédé pour le montage d'un composant (28) sur un support pour composant (12), en particulier à l'aide du système de fixation (10) selon la revendication 10, comportant les étapes consistant à :
- monter au préalable au moins une attache de fixation (16) sur le composant (28) en insérant une section de composant (49) du composant (28) dans une rainure radiale (48) de l'attache de fixation (16) ;
- disposer le composant (28) avec l'attache de fixation (16) montée au préalable par rapport à un boulon (14) qui est installé sur une surface (18) d'un support pour composant (12), et
- monter l'attache de fixation (16), dans lequel le boulon (14) est inséré dans un logement pour boulon (32) de l'attache de fixation (16), dans lequel une largeur de rainure axiale (B) de la rainure radiale (48) diminue et la section de composant (49) du composant (28) insérée dans la rainure radiale (48) est pressée axialement.
